# EUROPÄISCHE PATENTSCHRIFT

(11) **EP 2 541 112 B1**
(45) Veröffentlichungstag und Bekanntmachung des Hinweises auf die Patenterteilung: **03.09.2014**
(21) Anmeldenummer: 11005269.3
(22) Anmeldetag: 28.06.2011
(51) Int. Cl.: F16L 1/26, F16L 23/04, F16L 23/12, H01R 13/523

(54) **Maritime Versorgungsleitung**
Maritime supply conduit
Conduit d'alimentation maritime

(43) Veröffentlichungstag der Anmeldung: 02.01.2013
(73) Patentinhaber: BAUER Maschinen GmbH, 86529 Schrobenhausen (DE)
(72) Erfinder: Finkenzeller, Stefan, Michael, 85084 Reichertshofen (DE); Hofner, Georg, 86567 Hilgertshausen (DE); Wiedenmann, Ulrich, 86529 Schrobenhausen (DE)
(74) Vertreter: Wunderlich, Rainer

(56) Entgegenhaltungen:
- EP-A1- 1 630 466
- WO-A1-2005/116505
- FR-A1- 2 468 060
- US-A- 3 843 168
- US-A- 4 138 178
- US-A- 5 611 680

## Beschreibung

Die Erfindung betrifft eine maritime Versorgungsleitung mit mindestens zwei Leitungsstücken, welche jeweils einen Hüllschlauch, mindestens zwei Innenleitungen, welche in dem Hüllschlauch angeordnet sind, und ein an zumindest einem Ende des Leitungsstückes angeordnetes Verbindungselement zum Bilden einer wasserdichten Verbindung zu einem anzuschließenden Leitungsstück aufweisen.

Derartige Versorgungsleitungen dienen etwa zur Verbindung von Unterwassereinheiten mit Versorgungsschiffen. Über die Versorgungsleitung wird beispielsweise von dem Versorgungsschiff Energie, Daten sowie verschiedene Fluide an die Unterwassereinheit geleitet, so dass diese in der gewünschten Weise etwa am Grund des Meeres oder eines Sees arbeiten kann. Eine derartige Versorgungsleitung weist innerhalb eines Hüllschlauches entsprechend der vorzusehenden Versorgung verschiedene Leitungen auf.

Zum Anpassen an unterschiedliche Arbeitstiefen ist die Versorgungsleitung aus mehreren Leitungsstücken aufgebaut, welche über Verbindungselemente miteinander verbindbar sind.

Diese Verbindungselemente an maritimen Versorgungsleitungen müssen verschiedenste Anforderungen erfüllen. Zum einen müssen diese eine zuverlässige Verbindung der Innenleitungen gewährleisten. Zum anderen muss eine mechanisch stabile und auch wasser- und druckdichte Verbindung der äußeren Hülle gewährleistet sein.

Eine bekannte maritime Versorgungsleitung geht beispielsweise aus der US 4,138,178 hervor. Bei dem hierin beschriebenen Verbindungselement sind Steck verbindungen für die inneren Leitungen vorgesehen, während der äußere Hüllschlauch über eine Gewindeverbindung mit einer Überwurfmutter angeschlossen wird. Die Kombination von inneren Steckverbindungen und einer außen liegenden Überwurfmutter erfordert zum Schließen der Verbindung stets ein gewisses axiales Spiel der Überwurfmutter, was besondere Dichtungsmaßnahmen erfordert. Grundsätzlich sind Gewindeverbindungen bei Versorgungsleitungen mit größeren Durchmessern nur aufwändig zu bedienen. Bei einem rauen maritimen Einsatz sind die Gewinde zudem beschädigungsanfällig. Weiterhin ist diese bekannte Verbindung in axialer und radia ler Hinsicht relativ groß, wodurch ein Auftrommeln der Versorgungsleitung erheblich erschwert oder sogar unmöglich wird.

Aus der FR 2 468 060 A1 ist eine Verbindung bekannt, mit denen Strömungsleitungen und hydraulische Steuerleitungen abdichtend miteinander verbunden werden können. Der Anschluss der beiden Leitungsstücke erfolgt über Muffen, wobei zwischen den Muffen eine Dichtungsplatte zum Verbinden der einzelnen Leitungen vorgesehen ist, die über eine Klemmverbindungsvorrichtung festgeklemmt ist.

Aus der US 3,843,168 ist eine weitere Vorrichtung zum Verbinden zweier Rohrstücke unter Wasser bekannt, in der die anzuschließenden Rohrenden über eine mittels Schrauben betätigbare Spannvorrichtung radial umschlossen und zusammengepresst werden.

Der Erfindung liegt die **Aufgabe** zugrunde, eine maritime Versorgungsleitung mit mindestens zwei Leitungsstücken anzugeben, welche einfach und mechanisch stabil miteinander verbindbar sind.

Die Aufgabe wird nach der Erfindung durch eine maritime Versorgungsleitung mit den Merkmalen des Anspruchs 1 gelöst. Bevorzugte Ausführungsformen sind in den abhängigen Ansprüchen angegeben.

Die erfindungsgemäße maritime Versorgungsleitung ist dadurch gekennzeichnet, dass das Verbindungselement einen Verbindungsflansch mit einem radial vorstehenden Kragen aufweist, an welchen ein radial vorstehender Kragen eines Verbindungsflansches des anzuschließenden Leitungsstückes anlegbar ist, und dass zum Bilden der wasserdichten Verbindung die beiden radial vorstehenden Krägen von mindestens einer Spannklemme umfasst und axial gegeneinander gespannt sind.

Ein Aspekt der Erfindung besteht darin, an den Leitungsstücken der Versorgungsleitung eine Flanschverbindung vorzusehen. Durch das axiale Anlegen zweier, bevorzugt gleich ausgebildeter Flansche kann eine flüssigkeitsdichte und auch gegenüber hohen Drücken resistente Verbindung geschaffen werden.

Nach einem weiteren Aspekt der Erfindung ist dabei wesentlich, dass die Verbindungsflansche radial vorstehende Krägen aufweisen, welche von mindestens einer Spannklemme umfasst und axial gegeneinander gespannt werden. Entsprechend der aufzubringenden Spannkraft wird eine besonders stabile und auch dichte Verbindung erzielt.

Im Gegensatz zu Gewinden kann eine erfindungsgemäße Flanschverbindung bei einer maritimen Versorgungsleitung einfach und schnell betätigt werden. Zudem sind die mechanisch einfachen und kompakten Teile robust und somit auch bei einem rauen maritimen Einsatz kaum störungsanfällig.

Als Spannklemmen können grundsätzlich unterschiedliche Spannelemente verwendet werden, welche eine axiale Kraft auf die beiden Verbindungsflansche aufbringen können. Nach der Erfindung ist es besonders bevorzugt, dass die Spannklemme ringförmig mit zumindest zwei Spannklemmschalen ausgebildet ist. Derartige teilringförmige Spannklemmschalen bilden einen zusätzlichen aussenliegenden Schutz um die Verbindungsflansche.

Insbesondere vorteilhaft ist es nach der Erfindung, dass an dem Verbindungsflansch ein ringförmiger Anlagebereich zum Anlegen des Verbindungsflansches des anzuschließenden Leitungsstückes angeordnet ist und dass an einer von dem Anlagebereich abgewandten Rückseite des Kragens ein Spannbereich vorgesehen ist. Bevorzugt sind die Anlagebereiche und die Spannbereiche der gegenüberliegenden Verbindungsflansche gleich ausgebildet. Bei dieser Anordnung liegen die empfindlichen zum Abdichten vorgesehenen Anlagebereiche aneinander, während die rückwärtigen Spannbereiche am Kragen nach außen weisen.

Dabei besteht eine besondere Ausführungsform der Erfindung darin, dass der Anlagebereich eine ebene radiale Dichtwand aufweist und dass der Spannbereich konisch mit einer ringförmigen konischen Spannflanke ausgebildet ist. Über die ebenen ringförmigen Dichtwände wird eine großflächige Dichtfläche erreicht, was für eine gute Abdichtung vorteilhaft ist.

Dabei ist es nach der Erfindung besonders bevorzugt, dass die Spannklemme im Querschnitt U-förmig mit zwei radial verlaufenden Spannflächen ausgebildet ist, von denen zumindest eine Spannfläche passend zum konischen Spannbereich des Kragens konisch ausgestaltet ist. Durch ein Aufeinanderzuschieben der beiden etwa halbkreisförmigen Schalen der Spannklemme kann über die konischen Spannflächen der Spannklemme im Zusammenwirken mit den ringförmigen konischen Spannflanken an den Verbindungsflanschen diese radiale Bewegung ähnlich einem Keilschiebermechanismus in eine axiale Bewegung der Verbindungsflansche aufeinanderzu umgesetzt werden. Hierdurch sind hohe Andruckkräfte an den Dichtwänden erzielbar. Es wird so eine kraft- und formschlüssige Verbindung erzielt.

Für das Erzeugen hoher Spannkräfte ist es nach der Erfindung vorgesehen, dass die ringförmige Spannklemme eine Zugeinrichtung aufweist, durch welche die zumindest zwei Spannklemmenschalen zusammenziehbar sind. Diese Zugeinrichtung, welche in einem einfachen Fall ein Schraubbolzen sein kann, erlaubt mit üblichen Werkzeugen in einfacher Weise das Aufbringen hoher Zugkräfte auf die Spannklemme und damit hoher Andruckkräfte auf die aneinanderliegenden Verbindungsflansche.

Grundsätzlich kann die Dichtwand mechanisch derart fein bearbeitet sein, so dass separate Dichtelemente an den Dichtwänden nicht erforderlich sind. Grundsätzlich sind als Dichtmittel Dichtflüssigkeiten, Dichtpasten oder Flachdichtungen möglich. Besonders bevorzugt ist es nach der Erfindung, dass an der ringförmigen Dichtwand des Anlagebereiches mindestens ein Dichtring angeordnet ist. Hierzu kann in einem oder in beiden gegenüberliegenden Dichtwänden eine Aufnahmenut zum Aufnehmen des Dichtringes vorgesehen sein.

In dem Hüllschlauch sind mehrere Innenleitungen angeordnet, welche etwa als Datenkabel, Elektrokabel oder Fluidleitungen ausgebildet sind. Mehrere Leitungen können in einen Mehrfachstecker münden, so dass mit einer Steckbewegung mehrere Innenleitungen gleichzeitig angeschlossen werden. Nach der Erfindung ist es vorteilhaft, dass die Innenleitungen an ihren Enden jeweils getrennte Anschlusselemente aufweisen. Somit sind die Innenleitungen unabhängig voneinander anschließbar beziehungsweise lösbar.

Eine bevorzugte Ausführungsform der Erfindung besteht darin, dass zwischen den Verbindungselementen eine Verbindungsplatte mit Zwischensteckern für die Anschlusselemente der Innenleitungen angeordnet ist. Die Verbindungsplatte ist passend und dichtend in dem ringförmigen Innenraum des rohrförmigen Schaftes der Verbindungselemente einschiebbar. Hierdurch wird zusätzlich das Eindringen von Feuchtigkeit in das Innere des Hüllschlauches verhindert. Die Verbindungsplatte mit den Zwischensteckern vereinfacht zudem das Zusammenstecken der verschiedenen Innenleitungen der einzelnen Leitungsstücke.

Das Anschließen oder Lösen der Innenleitungen wird erfindungsgemäß noch dadurch verbessert, dass in einem Leitungsstück die Innenleitungen mit einer Überlänge gegenüber der Länge des Hüllschlauches ausgebildet sind und dass die Innenleitungen innerhalb des Hüllschlauches mit einem Freiraum angeordnet sind, welcher die Überlänge der Innenleitungen aufnimmt. Aufgrund der Überlänge stehen die Innenleitungen bei einem auseinandergezogenen Zustand gegenüber dem äußeren Hüllschlauch vor. Dieses axiale Vorstehen erlaubt ein einfaches Anschließen an die entsprechenden Steckelemente des anzuschließenden Schlauchelementes. Anschließend kann der Hüllschlauch über die angeschlossenen Innenleitungen geschoben werden, wobei dann die zuvor beschriebene äußere Flanschverbindung an dem Hüllschlauch geschlossen wird. Wenn auch an dem gegenüberliegenden Ende des Leitungsstückes ein weiteres Leitungsstück angeschlossen wird, werden die Innenleitungen in axialer Richtung gestaucht, so dass die Leitungen seitlich ausgelenkt werden. Die Überlänge beugt auch einer mechanischen Überlastung der Innenleitung, insbesondere bei Zugbeanspruchung der Versorgungsleitung vor. Die Überlänge der Innenleitungen kann hierbei in dem definiert vorgesehenen Freiraum in dem Hüllschlauch aufgenommen werden. Der Freiraum ist gebildet, indem die Querschnittsfläche des inneren Hohlraumes des Hüllschlauches entsprechend größer als die Querschnittsflächen aller darin angeordneten Innenleitungen ist.

Nach der Erfindung weist der Hüllschlauch einen Außendurchmesser auf, welcher größer als der Außendurchmesser des ringförmigen Kragens ist. Gemäß der Erfindung ist vorgesehen, dass der Außendurchmesser des Hüllschlauches größer oder gleich dem Außendurchmesser der ringförmigen Spannklemme ist. Hierdurch kann erreicht werden, dass in dem Verbindungsbereich der Leitungsstücke radial nichts über den Hüllschlauch vorsteht. Dies erlaubt ein gutes Handhaben der maritimen Versorgungsleitung, etwa wenn diese über die Bordwand eines Versorgungsschiffes in ein Gewässer abgesenkt werden muss. Weiter vermindert sich die Gefahr von unerwünschten Verhakungen und damit von Beschädigung der Versorgungsleitung. Auch wird durch diese kompakte Ausgestaltung des Verbindungsbereiches ein gutes Auftrommeln oder Aufwickeln der Versorgungsleitung auf eine Trommel oder Spule ermöglicht. Dies vermindert auch den Verschleiß der maritimen Versorgungsleitung.

Die Erfindung wird nachfolgend anhand von bevorzugten Ausführungsbeispielen weiter erläutert, welche schematisch in den Zeichnungen dargestellt sind. In den Zeichnungen zeigen:
- Fig. 1: eine Vorderansicht auf eine erfindungsgemäße maritime Versorgungsleitung;
- Fig. 2: eine Querschnittsansicht der Versorgungsleitung von Fig. 1 gemäß dem Schnitt A-A mit vollständig angeschlossenen Leitungsstücken;
- Fig. 3: eine Querschnittsansicht entsprechend Fig. 2 der Versorgungsleitung, jedoch mit geöffnetem Hüllschlauch;
- Fig. 4: eine perspektivische Detailansicht eines Verbindungsbereiches von zwei Leitungsstücken bei geöffnetem Hüllschlauch; und
- Fig. 5: eine perspektivische Detailansicht entsprechend Fig. 4 bei geschlossenem Hüllschlauch.

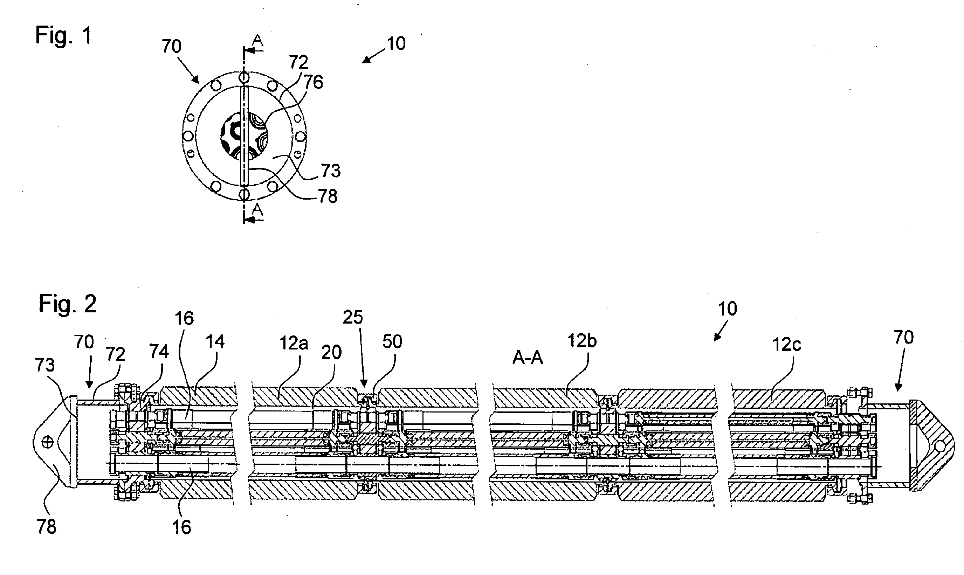

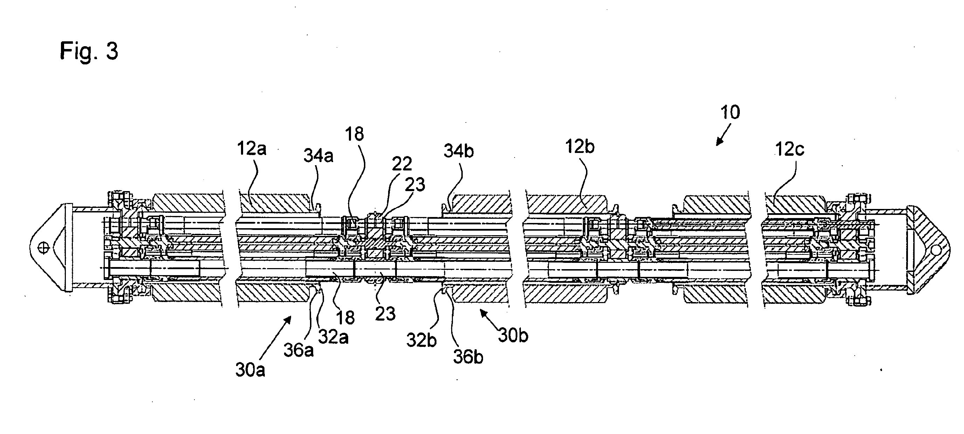

Der grundsätzliche Aufbau einer erfindungsgemäßen maritimen Versorgungsleitung 10 wird zunächst im Zusammenhang mit den Figuren 1 und 3 erläutert. Wie den Figuren 2 und 3 zu entnehmen ist, ist das dargestellte Ausführungsbeispiel einer erfindungsgemäßen Versorgungsleitung 10 aus drei Leitungsstücken 12a, 12b, 12c aufgebaut. Die Leitungsstücke 12a, 12b, 12c mit allen Teilen sind jeweils gleich ausgebildet, so dass der Aufbau exemplarisch an dem Leitungsstück 12a beschrieben wird.

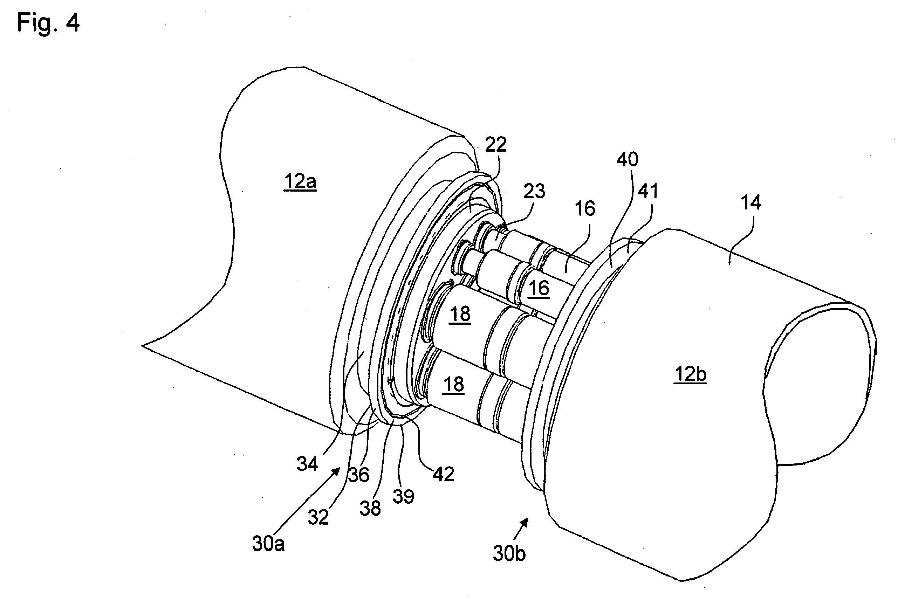

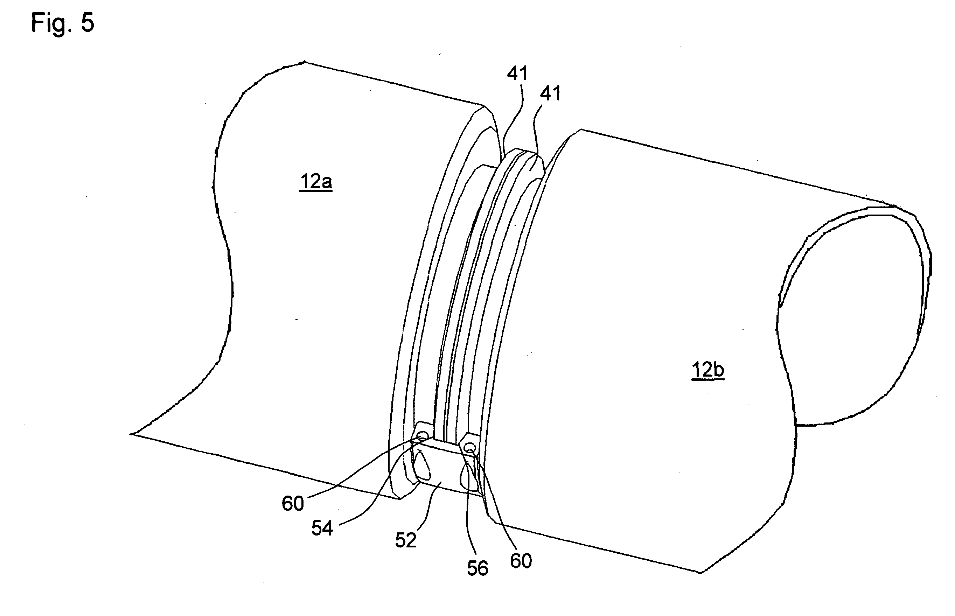

Innerhalb eines flexiblen Hüllschlauches 14 sind mehrere Innenleitungen 16 angeordnet. An den beiden äußeren Enden des Hüllschlauches 14 ist jeweils ein gleich aufgebautes Verbindungselement 30a aus Metall angebracht. Das Verbindungselement 30a weist dabei einen hülsenförmigen Schaft 34a auf, welcher an seinem freien Rand zum Bilden eines Verbindungsflansches 32a in einen radial vorstehenden Kragen 36a mündet. Ein gegenüberliegendes Verbindungselement 30b eines anzuschließenden Leitungsstückes 12b ist in gleicher Weise mit einem Schaft 34b und einem Verbindungsflansch 32b mit radial vorstehendem Kragen 36b ausgebildet. Der Aufbau wird nachfolgend näher im Zusammenhang mit den Figuren 4 und 5 beschrieben.

Zum Verbinden der beiden Leitungsstücke 12a, 12b werden zunächst steckerförmige Anschlusselemente 18 an den Enden der Innenleitungen 16 mit Zwischensteckern 23 verbunden, welche in einer scheibenförmigen Verbindungsplatte 22 angeordnet sind. Die Verbindungsplatte 22 kann passend und dichtend in den zylindrischen Hohlraum der Schäfte 34a, 34b der beiden Verbindungselemente 30a, 30b eingeschoben werden. In dem zusammengeschobenen Zustand, welcher in Fig. 2 dargestellt ist, werden die beiden aneinanderliegenden Verbindungselemente 30a, 30b von einer ringförmigen Spannklemme 50 umfasst und dichtend gegeneinander gespannt. Hierdurch wird insgesamt eine wasserdichte Verbindung 25 zwischen den beiden Leitungsstücken 12a, 12b geschaffen.

An den beiden Endbereichen der maritimen Versorgungsleitung 10 ist jeweils ein Endhalter 70 angeordnet, welcher insbesondere in Fig. 1 in Vorderansicht dargestellt ist. Der Endhalter 70 umfasst einen zylindrischen Abschlusstopf 72 mit einer ringförmigen Deckplatte 73, welche einen Mittendurchgang 76 aufweist. An der Außenseite der Deckplatte 73 ist ein Haltebügel 78 angeschweißt, welcher insbesondere zu Transportzwecken und Halterung der Versorgungsleitung 10 dient. Der Endhalter 70 wird über einen Adapterflansch 74 mit dem entsprechenden Verbindungselement 30 des angrenzenden Leitungsstückes 12a verbunden.

In Fig. 4 ist ein Zwischenzustand beim Verbinden der beiden Leitungsstücke 12a, 12b dargestellt. So sind die Anschlusselemente 18 der Innenleitungen 16 des anschließenden Leitungsstückes 12b bereits mit den Zwischensteckern 23 in der Verbindungsplatte 22 verbunden. Die Verbindungsplatte 22 ist passend und dicht in den rohrförmigen Schaft 34 des gegenüberliegenden Verbindungselementes 30a des Leitungsstückes 12a eingeschoben. Nunmehr kann der Hüllschlauch 14 mit dem Verbindungselement 30b des Leitungsstückes 12b über die angeschlossenen Innenleitungen 16 geschoben werden, was durch einen entsprechenden Freiraum 20 innerhalb des Hüllschlauches 14 ermöglicht wird. Bei diesem Zusammenschieben gelangen die Anlagebereiche 38 an den beiden Verbindungsflanschen 32 miteinander in Kontakt. Der Anlagebereich 38 weist jeweils eine ebene ringförmige Dichtwand 39 auf. In einer Dichtwand 33 ist eine Nut zur Aufnahme eines Dichtringes 42 eingebracht. An dem radial vorstehenden Kragen 36 ist an der dem Anlagebereich 38 gegenüberliegenden Rückseite ein Spannbereich 40 mit einer konischen Spannflanke 41 ausgebildet.

Die Funktionsweise der Spannflanke 41 wird näher im Zusammenhang mit Fig. 5 erläutert, welche in einer teilgeschnittenen Ansicht die verbundenen Leitungsstücke 12a, 12b zeigt. Die beiden aneinanderliegenden Verbindungsflansche 32 werden von einer Spannklemme 50 umfasst, von welcher lediglich ein Teil einer einzelnen Spannklemmenschale 52 dargestellt ist. Diese Spannklemmenschale 52 weist einen etwa U-förmigen Querschnitt mit einer mittigen Innennut auf. Hierdurch sind eine erste Spannwand mit Spannfläche 54 und eine zweite Spannwand mit Spannfläche 56 gebildet, welche gegenüber der radialen Richtung angewinkelt sind.

Die Anwinkelung der beiden Spannflächen 54, 56 entspricht dem Konuswinkel der konischen Spannflanken 41 an den Rückseiten der Verbindungsflansche 30. Durch ein Zusammenziehen der beiden Spannklemmenschalen 52 der Spannklemme 50 in Umfangsrichtung mittels einer Zugeinrichtung 60, von welcher lediglich eine Gewindebohrung dargestellt ist, werden die beiden Spannklemmenschalen aufeinander zugezogen. Durch dieses radiale Zusammenziehen, welches durch Anziehen von zwei nicht dargestellten Spannschrauben bewirkt wird, wird über die konische Ausbildung der Spannflächen 54, 56 und der zugehörigen Spannflanken 41 eine axiale Spannkraft bewirkt, welche die beiden Verbindungsflansche 30 der Leitungsstücke 12a, 12b zueinander zwingt. Insgesamt wird hierdurch eine mechanisch stabile und dichte Verbindung geschaffen, welche zugleich besonders robust und kompakt ist.

## Patentansprüche

1. Maritime Versorgungsleitung mit mindestens zwei Leitungsstücken (12a, 12b), welche jeweils
- einen flexiblen Hüllschlauch (14),
- mindestens zwei Innenleitungen (16), welche in dem Hüllschlauch (14) angeordnet sind, und
- ein an zumindest einem Ende des Leitungsstückes (12a) angeordnetes Verbindungselement (30a) zum Bilden einer wasserdichten Verbindung (25) zu einem anzuschließenden Leitungsstück (12b)
aufweisen,
**dadurch gekennzeichnet,**
- **dass** das Verbindungselement (30a) einen Verbindungsflansch (32a) mit einem radial vorstehenden Kragen (36a) aufweist, an welchen ein radial vorstehender Kragen (36b) eines Verbindungsflansches (32b) des anzuschließenden Leitungsstückes (12b) anlegbar ist,
- **dass** zum Bilden der wasserdichten Verbindung (25) die beiden radial vorstehenden Krägen (36a, 36b) von mindestens einer Spannklemme (50) umfasst und axial gegeneinander gespannt sind,
- **dass** der Hüllschlauch (14) einen Außendurchmesser aufweist, welcher größer als der Außendurchmesser des ringförmigen Kragens (36) ist,
und
- **dass** der Außendurchmesser des Hüllschlauches (14) größer oder gleich dem Außendurchmesser der ringförmigen Spannklemme (50) ist.

2. Maritime Versorgungsleitung nach Anspruch 1,
**dadurch gekennzeichnet,**
**dass** die Spannklemme (50) ringförmig mit zumindest zwei Spannklemmenschalen (52) ausgebildet ist.

3. Maritime Versorgungsleitung nach Anspruch 1 oder 2,
**dadurch gekennzeichnet,**
**dass** an dem Verbindungsflansch (32a) ein ringförmiger Anlagebereich (38) zum Anlegen des Verbindungsflansches (32b) des anzuschließenden Leitungsstückes (12b) angeordnet ist und
**dass** an einer von dem Anlagebereich (38) abgewandten Rückseite des Kragens (36) ein Spannbereich (40) vorgesehen ist.

4. Maritime Versorgungsleitung nach Anspruch 3,
**dadurch gekennzeichnet,**
**dass** der Anlagebereich (38a) eine ebene radiale Dichtwand (39a) aufweist und
**dass** der Spannbereich (40a) konisch mit einer ringförmigen konischen Spannflanke (41 a) ausgebildet ist.

5. Maritime Versorgungsleitung nach Anspruch 4,
**dadurch gekennzeichnet,**
**dass** die Spannklemme (50) im Querschnitt U-förmig mit zwei radial verlaufenden Spannflächen (54, 56) ausgebildet ist, von denen zumindest eine Spannfläche (54, 56) passend zum konischen Spannbereich (40) des Kragens (36) konisch gestaltet ist.

6. Maritime Versorgungsleitung nach einem der Ansprüche 2 bis 5,
**dadurch gekennzeichnet,**
**dass** die ringförmige Spannklemme (50) eine Zugeinrichtung (60) aufweist, durch welche die zumindest zwei Spannklemmenschalen (52) zusammenziehbar sind.

7. Maritime Versorgungsleitung nach einem der Ansprüche 3 bis 6,
**dadurch gekennzeichnet,**
**dass** an der ringförmigen Dichtwand (39) des Anlagebereiches (38) mindestens ein Dichtring (42) angeordnet ist.

8. Maritime Versorgungsleitung nach einem der Ansprüche 1 bis 7,
**dadurch gekennzeichnet,**
**dass** die Innenleitungen (16) an ihren Enden jeweils getrennte Anschlusselemente (18) aufweisen.

9. Maritime Versorgungsleitung nach Anspruch 8,
**dadurch gekennzeichnet,**
**dass** zwischen den Verbindungselementen (30) eine Verbindungsplatte (22) mit Zwischensteckern (23) für die Anschlusselemente (18) der Innenleitungen (10) angeordnet ist.

10. Maritime Versorgungsleitung nach einem der Ansprüche 1 bis 9,
**dadurch gekennzeichnet,**
**dass** in einem Leitungsstück (12) die Innenleitungen (16) mit einer Überlänge gegenüber der Länge des Hüllschlauches (14) ausgebildet sind und dass die Innenleitungen (16) innerhalb des Hüllschlauches (14) mit einem Freiraum (20) angeordnet sind, welcher die Überlänge der Innenleitungen (16) aufnimmt.

## Claims

1. Maritime supply line with at least two line elements (12a, 12b) which respectively comprise:
- a jacket pipe (14),
- at least two inner lines (16) which are arranged in the jacket pipe (14), and
- a connecting element (30a) arranged at least at one end of the line element (12a) for the formation of a watertight connection (25) to a line element (12b) to be connected,
**characterised in that**
- the connecting element (30a) comprises a connecting flange (32a) with a radially projecting collar (36a), on which a radially projecting collar (36b) of a connecting flange (32b) of the line element (12b) to be connected can be placed, and
- for the formation of the watertight connection (25) the two radially projecting collars (36a, 36b) are incorporated by at least one tensioning clamp (50) and axially tensioned against each other.
- the jacket pipe (14) has an outer diameter which is greater than the outer diameter of the annular collar (36).
- the outer diameter of the jacket pipe (14) is greater than or equal to the outer diameter of the annular tensioning clamp (50).

2. Maritime supply line according to claim 1,
**characterised in that**
the tensioning clamp (50) is formed annularly with at least two tensioning clamp shells (52).

3. Maritime supply line according to claim 1 or 2,
**characterised in that**
an annular abutment region (38) for placing the connecting flange (32b) of the line element (12b) to be connected is arranged on the connecting flange (32a), and
a tensioning region (40) is provided on a rear side of the collar (36) facing away from the abutment region (38).

4. Maritime supply line according to claim 3,
**characterised in that**
the abutment region (38a) comprises a planar radial sealing wall (39a), and the tensioning region (40a) is formed conically with an annular conical tensioning flank (41 a).

5. Maritime supply line according to claim 4,
**characterised in that**
the tensioning clamp (50) is formed with a U-shaped cross-section with two radially extending tensioning surfaces (54, 56), of which at least one tensioning surface (54, 56) is conically formed corresponding to the conical tensioning region (40) of the collar (36).

6. Maritime supply line according to one of the claims 2 to 5,
**characterised in that**
the annular tensioning clamp (50) comprises a pulling means (60), through which the at least two tensioning clamp shells (52) can be pulled together.

7. Maritime supply line according to one of the claims 3 to 6,
**characterised in that**
at least one sealing ring (42) is arranged on the annular sealing wall (39) of the abutment region (38).

8. Maritime supply line according to one of the claims 1 to 7,
**characterised in that**
each of the inner lines (16) comprise separate connection elements (18) at their ends.

9. Maritime supply line according to claim 8,
**characterised in that**
a connecting plate (22) with intermediate plugs (23) for the connection elements (18) of the inner lines (10) is arranged between the connecting elements (30).

10. Maritime supply line according to one of the claims 1 to 9,
**characterised in that**
the inner lines (16) are formed in a line element (12) with an additional length having regard to the length of the jacket pipe (14) and
the inner lines (16) are arranged within the jacket pipe (14) with a free space (20) which receives the additional length of the inner lines (16).

## Revendications

1. Conduit d'alimentation maritime avec au moins deux tronçons de conduit (12a, 12b), qui comprennent chacun :
- un manchon (14) flexible,
- au moins deux conduits intérieurs (16), qui sont disposés dans le manchon (14), et
- un élément de raccordement (30a) disposé à au moins une extrémité du tronçon de conduit (12a) pour la formation d'un raccordement étanche à l'eau (25) à un tronçon de conduit (12b) devant être raccordé,
**caractérisé :**
- **en ce que** l'élément de raccordement (30a) comprend une bride de raccordement (32a) avec une collerette dirigée radialement (36a), contre laquelle peut être appliquée une collerette dirigée radialement (36b) d'une bride de raccordement (32b) du tronçon de conduit (12b) devant être raccordé,
- **en ce que**, pour la formation du raccordement étanche à l'eau (25), les deux collerettes dirigées radialement (36a, 36b) sont entourées par au moins une bride de serrage (50) et serrées axialement l'une contre l'autre,
- **en ce que** le manchon (14) comporte un diamètre extérieur, qui est plus grand que le diamètre extérieur de la collerette annulaire (36), et
- **en ce que** le diamètre extérieur du manchon (14) est plus grand que le diamètre extérieur de la bride de serrage annulaire (50) ou égal à celui-ci.

2. Conduit d'alimentation maritime selon la revendication 1,
**caractérisé :**
**en ce que** la bride de serrage (50) est de forme annulaire, avec au moins deux sabots de bride de serrage (52).

3. Conduit d'alimentation maritime selon la revendication 1 ou 2,
**caractérisé :**
**en ce qu'**une zone d'appui de forme annulaire (38) est disposée sur la bride de raccordement (32a) pour la venue en appui de la bride de raccordement (32b) du tronçon de conduit (12b) devant être raccordé, et
**en ce que** une zone de serrage (40) est prévue sur une face arrière - opposée à la zone d'appui (38) - de la collerette (36).

4. Conduit d'alimentation maritime selon la revendication 3,
**caractérisé :**
**en ce que** la zone d'appui (38a) comprend une paroi d'étanchéité plane radiale (39a), et
**en ce que** la zone de serrage (40a) est conique, avec un flanc de serrage annulaire conique (41a).

5. Conduit d'alimentation maritime selon la revendication 4,
**caractérisé :**
**en ce que** la bride de serrage (50) présente une section transversale, en forme de U, avec deux surfaces de serrage (54, 56) s'étendant radialement, parmi lesquelles au moins une surface de serrage (54, 56) est de forme conique en étant ajustée à la zone de serrage (40) conique de la collerette (36).

6. Conduit d'alimentation maritime selon une des revendications 2 à 5,
**caractérisé :**
**en ce que** la bride de serrage annulaire (50) comprend un dispositif de traction (60), au moyen duquel les au moins deux sabots de bride de serrage (52) peuvent être tirés l'un vers l'autre.

7. Conduit d'alimentation maritime selon une des revendications 3 à 6,
**caractérisé :**
**en ce qu'**au moins une bague d'étanchéité (42) est disposée sur la paroi d'étanchéité annulaire (39) de la zone d'appui (38).

8. Conduit d'alimentation maritime selon une des revendications 1 à 7,
**caractérisé :**
**en ce que** les conduits intérieurs (16) comprennent chacun à leurs extrémités des éléments de jonction (18) distincts.

9. Conduit d'alimentation maritime selon la revendication 8,
**caractérisé :**
**en ce qu'**une plaque de raccordement (22), avec des connecteurs intermédiaires (23) pour les éléments de jonction (18) des conduits intérieurs (16), est disposée entre les éléments de raccordement (30).

10. Conduit d'alimentation maritime selon une des revendications 1 à 9,
**caractérisé :**
**en ce que**, dans un tronçon de conduit (12), les conduits intérieurs (16) sont constitués avec un excédent de longueur par rapport à la longueur du manchon (14), et
**en ce que** les conduits intérieurs (16) sont disposés à l'intérieur du manchon (14), avec un espace libre (20) qui couvre l'excédent de longueur des conduits intérieurs (16).
